# EUROPEAN PATENT APPLICATION

(11) **EP 4 520 992 A1**
(43) Date of publication of application: **12.03.2025**
(21) Application number: 23195268.0
(22) Date of filing: 05.09.2023
(51) Int. Cl.: F16D 55/226

(54) **BRAKE ASSEMBLY, BRAKE SYSTEM, METHOD FOR OPERATING A BRAKE CALIPER AND VEHICLE**

(71) Applicant: KNORR-BREMSE Systeme für Nutzfahrzeuge GmbH, 80809 München (DE)
(72) Inventor: BLESSING, Michael, 80687 München (DE); Györke, Zsombor, 8360 Keszthely (HU); FARAGÓ, Balázs, 6050 Lajosmizse (HU); KLINGNER, Matthias, 82276 Adelshofen (DE); KRETZ, Philipp, 80939 München (DE); KÜHNEMUTH, Gregor, 80339 München (DE); MONORI, Gyula, 6065 Lakitelek (HU); TOTH, Janos, 6000 Kecskemét (HU); PESCHEL, Michael, 82296 Schöngeising (DE); SCHÖFBERGER, Tobias, 84048 Mainburg (DE)

(57) **Abstract**

The present invention relates to a brake assembly (100, 100ʺʺ), comprising:
at least one first brake pad (22a) and at least one second brake pad (22b), wherein the at least one first brake pad (22a) and the at least one second brake pad (22b) each comprising a braking surface arranged opposed to each other and facing each other,
a brake caliper (24) operatively connected to the at least one first brake pad (22a) and the at least one second brake pad (22b), wherein the respective operative connections are configured to cause a movement of the brake caliper (24) to move the at least one second brake pad (22b) toward the at least one first brake pad (22a) in response to a movement of the at least one first brake pad (22a) toward the at least one second brake pad (22b) in a braking direction,
a brake caliper guidance (7) configured to guide a relative movement of the brake caliper (24) in the braking direction, and
an actuating member (1, 20, 26) operatively connected to the at least one first brake pad (22a) and configured to move the at least one first brake pad (22a) into a braking direction by being translationally or rotationally driven,
wherein the operative connection between the brake caliper (24) and the first brake pad (22a) comprises at least one transfer mechanism (10) configured to move the brake caliper (24) in an opposite direction of the moving direction of the at least one first brake pad (22a) in the braking direction,
wherein the at least one transfer mechanism (10) is operatively connected to the brake caliper guidance (7) for a relative movement of the brake caliper (24) with respect to the brake caliper guidance (7), and
wherein the actuating member (1, 20, 26) is configured to drive the transfer mechanism (10) for an opposite movement of the brake caliper (24) along the brake caliper guidance (7) with respect to the at least one first brake pad (22a) being moved in the braking direction.

## Description

The present invention relates to a brake assembly, a brake system comprising such brake assembly, a method for operating a brake caliper of such brake assembly or brake system and a vehicle.

Today's disc brakes create a clamping force to brake pads, e.g., via an eccentric lever and a pneumatic actuator. A respective brake caliper may be a free sliding caliper, which can slide from one side to the other corresponding to the clearance between the brake pad and disk. As a result of friction forces or external loads such as lateral acceleration of the brake caliper at least one pad will contact the brake disc and a drag torque will be generated. To avoid such drag torque, solutions specified in EP 3 406 929 A1 and EP 3 308 047 A1 are known. Here, the pads will be pushed away from the brake disc and spreading elements designed as springs are fixed to axle fixated part to centre the caliper. This solution limits the forces to lift the pads, i.e. the restoring forces that act against the application direction of the two brake pads, due to the limited adjustment force, i.e. the adjuster force which adjusts the clearance, which must overdrive the push back forces of the pads and due to tolerance reasons, e.g. component tolerances. However, the relative position of the brake disc in axial direction to the brake flange can vary more than the overall running clearance, i.e. the initially set clearance between the brake pads and the brake disc, so that in a new condition, related to pad and disc wear, it is possible that one pad is permanently in contact with the disc until the wear is high enough and the pad runs free by having no contact with the disc.

It is an object of the present invention to provide a brake assembly which allows an improved operation of brake pads.

The object is solved by the subject matter of the independent claims. Further aspects of the present invention are subject to the dependent claims.

According to the present invention, a brake assembly comprises at least one first brake pad and at least one second brake pad, wherein the at least one first brake pad and the at least one second brake pad each comprising a braking surface arranged opposed to each other and facing each other, and a brake caliper operatively connected to the at least one first brake pad and the at least one second brake pad, wherein the respective operative connections are configured to cause a movement of the brake caliper to move the at least one second brake pad toward the at least one first brake pad in response to a movement of the at least one first brake pad toward the at least one second brake pad in a braking direction. The brake assembly further comprises a brake caliper guidance configured to guide a relative movement of the brake caliper in the braking direction, and an actuating member operatively connected to the at least one first brake pad and configured to move the at least one first brake pad into a braking direction by being translationally or rotationally driven. The operative connection between the brake caliper and the first brake pad comprises at least one transfer mechanism configured to move the brake caliper in an opposite direction of the moving direction of the at least one first brake pad in the braking direction. The at least one transfer mechanism is operatively connected to the brake caliper guidance for a relative movement of the brake caliper with respect to the brake caliper guidance. Further, the actuating member is configured to drive the transfer mechanism for an opposite movement of the brake caliper along the brake caliper guidance with respect to the at least one first brake pad being moved in the braking direction.

Accordingly, the actuating member is configured to allow moving the brake caliper and thereby the at least one second brake pad simultaneously with moving the at least one first brake pad. The actuating member may be a brake actuator, such as a service brake actuator, which initiates a movement of the at least one first brake pad. Alternatively, the actuating member may be a lever arm or other transfer mechanism, which is actuated by the brake actuator to further transfer the respective movement of the brake actuator on the at least one first brake pad. As a further alternative, the actuating member may be a bridge member, which is actuated directly by the brake actuator or indirectly by the brake actuator via lever arm arranged between the brake actuator and the bridge member.

The basic principle applied by the present invention is the active drive of the transfer mechanism by the actuating member to actively drive the brake caliper and thereby the at least one second brake pad to be simultaneously movable with the actuation of the at least one first brake pad. Specifically, the actuating mechanism to move the at least one first brake pad is also used to move the brake caliper and at least one second brake pad, respectively, by one of the components of the actuating mechanism as actuating member, such as the brake actuator, the lever arm or the bridge member. In other words, the brake caliper and thereby the at least one second brake pad are actively driven by the actuating mechanism of the at least one first brake pad, instead of being passively moved in response to a movement of the at least one first brake pad and respective reaction forces. This allows faster reaction times for clamping and releasing a brake disc by the at least one first brake pad and the at least one second brake pad. Further, a substantially simultaneous contact of the at least one first brake pad and the at least one second brake pad is supported, which, for example, may reduce unbalanced wear. Further, with respect to release of the brake pads substantially simultaneously from the brake disc, drag torque may be avoided or at least reduced.

In the following description, the actuating member is represented by the bridge member as an exemplary embodiment of the actuating member. Accordingly, any functional principle or structure described with respect to the bridge member is also applicable on any other actuating member, specifically on the brake actuator or the lever arm. In other words, the term bridge member may be understood as synonym for the actuating member and therefore the brake actuator or lever arm, respectively, as long as a structure or functional principle is solely representable by a specific actuating member, for example, the bridge member.

The bridge member is representative of a clamping mechanism to move the at least one first brake pad toward a brake disc in a braking direction. The bridge member may be actuated by a lever mechanism or the like. In response to an actuation of the bridge member and a respective movement of the at least one first brake pad toward the brake disc, the bridge member also drives the brake caliper to be moved in the opposite direction to move the at least one second brake pad toward the at least one first brake pad. The brake disc being arranged between the at least one first brake pad and the at least one second brake pad may thereby be clamped in dependence of the stroke provided by the bridge member and the corresponding stroke of the brake caliper. The at least one first brake pad may be an inboard brake pad and the at least one second brake pad may be an outboard brake pad. However, the at least one first brake pad may be an outboard brake pad and the at least one second brake pad may be an inboard brake pad.

In view of the above, the bridge member provides a direct or active drive of the brake caliper via the transfer mechanism for a breaking action instead of the brake caliper being only subject to reaction forces. Accordingly, the movement of the brake caliper may be actively controlled or set, respectively, in dependence on the configuration of the transfer mechanism and the respective transfer ratio. In other words, the transfer mechanism uses the movement of the bridge member during a braking action and transfers this movement to the brake caliper guidance at predetermined transfer ratio based on the brake stroke. In an ideal case, the clearance between the brake disc and each of the at least one first and second brake pads is equally balanced at the beginning of a braking action. The bridge member pushes the at least one first brake pad onto the brake disc, while the brake caliper will be pulled in the opposite direction, due to which the at least one second brake pad will be pushed simultaneously onto the brake disc from the other side.

Preferably, the bridge member and transfer mechanism, respectively, may be configured to drive the brake caliper bidirectionally. Accordingly, the brake caliper and thereby the at least one second brake pad is not only actively moveable in the braking direction to provide a braking action but also actively moveable in the opposite direction for a brake release. Since the transfer mechanism is capable of providing a set transfer ratio, a respective clearance between the at least one second brake pad and the brake disc can be supported to avoid drag torque and the resulting energy consumption, as well as wear and respective potential dust emissions. Furthermore, the lifetime of lining material on the at least one second brake pad may be extended or the lining material may be reduced for the same mileage in order to strengthen sustainability.

In some embodiments, the brake assembly further comprises a torque limiter, preferably an overload clutch, the torque limiter being configured to stop the opposite movement of the brake caliper upon reaching a predetermined torque acting on the transfer mechanism.

As previously described, the brake caliper may be moved actively by the transfer mechanism driven by the bridge member as exemplary actuating member in order push the at least one second brake pad onto the brake disc. As soon as the contact of the at least one first and second brake pads is ensured, the torque limiter is activated in order to avoid the damaging of the transfer mechanism. Further, the torque limiter being activated generates automatically a new set point for centering the brake caliper.

For example, the torque limiter may be an overload clutch comprised by the transfer mechanism. In the event of a braking action, the contact of the at least one first and second brake pads with the brake disc is represented by a specific predetermined torque acting on the overload clutch. By reaching the predetermined torque, the overload clutch opens and the movement of the bridge member toward the brake disc is no longer transferred on the brake caliper. For example, in the event of a braking action, one of the first and second brake pads may reach the brake disc before the other one of the first and second brake pads does. This may result in overloading the transfer mechanism by the resulting force. Accordingly, the new setpoint for the brake caliper is set to provide a movement of the brake caliper to release the at least one second brake pad from the brake disc upon a movement of the bridge member in the direction away from the brake disc to release the at least one first brake pad. By releasing the at least one first brake pad, the clamping force and thereby the torque acting on the overload clutch is reduced. As a result, the overload clutch is closed to transfer the movement of the bridge member on the brake caliper for a release movement as per the defined transfer ratio starting from the new setpoint. Closing of the overload clutch may be initiated by a torque representing a clamping force of substantially 0 N or by another predetermined torque as a lower limit. A similar case may occur in a configuration of the brake assembly comprising at least one brake release spring, for example a compression spring arranged between the bridge member and the brake caliper and extending in the braking direction. In such configuration, if the brake unit gets a larger lateral load than a load the at least one brake release spring is capable to compensate, the teeth of the gear wheels may become subject to an overload, which may be avoided by using a frictional clutch as exemplary torque limiter.

The overload clutch may be controlled by control signals representative of a predetermined torque and/or due to the constructional design, e.g. by a frictional clutch as overload clutch.

Preferably, the overload clutch is designed to withstand a specific lateral acceleration of the brake caliper.

In some embodiments, the actuating member comprises at least one toothed rack surface extending in the braking direction, and the brake caliper guidance comprises at least one toothed rack surface. Further, the transfer mechanism comprises at least one input gear wheel pivotally supported about an input gear wheel rotational axis and operatively connected to the brake caliper in a fixed positional relationship and at least one output gear wheel pivotally supported about an output gear wheel rotational axis, wherein the at least one input gear wheel is in engagement with the at least one toothed rack surface of the actuating member and the at least one output gear is in engagement with the at least one toothed rack surface of the brake caliper guidance.

For example, the at least one input gear wheel is driven by the at least one toothed rack surface of the bridge member as exemplary actuating member to rotate about the input gear wheel rotational axis. The rotation of the at least one input gear wheel drives the at least one output gear wheel to rotate about the output gear wheel rotational axis to thereby move along the brake caliper guidance. The brake caliper is thereby moved in correspondence with the movement of the output gear wheel along the brake caliper guidance. The input gear wheel rotational axis and the output gear wheel rotational axis are preferably in a constant positional relationship to restrict the movement of the brake caliper to the movement of the output gear wheel along the brake caliper guidance. In principle, respective toothed rack surfaces and gear wheels provide a form-fit driving mechanism.

In some embodiments, the actuating member comprises at least one frictional surface extending in the braking direction, and the brake caliper guidance comprises at least one frictional surface. Further, the transfer mechanism comprises at least one pretensioned input frictional wheel pivotally supported about an input frictional wheel rotational axis and operatively connected to the brake caliper in a fixed positional relationship and at least one pretensioned output frictional wheel pivotally supported about an output frictional wheel rotational axis, wherein the at least one pretensioned input frictional wheel is in frictional contact with the at least one frictional surface of the actuating member and the at least one pretensioned output frictional wheel is in frictional contact with the at least one frictional surface of the brake caliper guidance.

The respective frictional surfaces and respective pretensioned frictional wheels differ the previously described respective toothed rack surfaces and gear wheels in that the transfer mechanism is not based on a form-fit engagement but a force-fit engagement or frictional contact, respectively. However, both principles may also be combined and/or may vary for the different engagement couplings.

The frictional contact allows the at least one pretensioned input frictional wheel and/or the at least one pretensioned output frictional wheel to also serve as overload clutch.

In some embodiments, the at least one input gear wheel or pretensioned input frictional wheel is in engagement or frictional contact with the at least one output gear wheel or pretensioned output frictional wheel.

For example, the at least one input gear wheel is in direct engagement with the at least one output gear wheel. Alternatively, the at least one pretensioned input frictional wheel is in direct frictional contact with the at least one pretensioned output frictional wheel.

In some embodiments, the at least one input gear wheel or pretensioned input frictional wheel comprises a gear wheel configured to rotate together with the input gear wheel and having a non-constant diameter, preferably having an outer diameter of a spiral shape or cam shape. Alternatively or in addition, the at least one output gear wheel or pretensioned output frictional wheel comprises a gear wheel configured to rotate together with the output gear wheel and having a non-constant diameter, preferably having an outer diameter of a spiral shape or cam shape. The at least one input gear wheel or pretensioned input frictional wheel is in engagement with the at least one output gear wheel or pretensioned input frictional wheel via the gear wheel of the at least one input gear wheel and/or via the gear wheel of the at least one output gear wheel.

The gear wheel of the input gear wheel or pretensioned input frictional wheel and/or the gear wheel of the output gear wheel or pretensioned output frictional wheel may be integrally formed with the respective input or output gear wheel or frictional wheel, or may be attached thereto. Preferably, the rotational axis of the gear wheel of the input gear wheel or pretensioned input frictional wheel and/or the rotational axis of the gear wheel of the output gear wheel or pretensioned output frictional wheel is in parallel to the respective rotational axis of the respective gear wheel or frictional wheel. The rotational axis may also be coaxially aligned.

Alternatively or in addition, instead of the gear wheel of the input gear wheel or pretensioned input frictional wheel and/or the gear wheel of the output gear wheel or pretensioned output frictional wheel a pretensioned frictional wheel may be used.

In some embodiments, the transfer mechanism comprises at least one intermediate gear wheel, which is in engagement with the at least one input gear wheel or pretensioned input frictional wheel, and which is in engagement with the at least one output gear wheel or pretensioned output frictional wheel or connected to the at least one output gear wheel or pretensioned output frictional wheel, preferably by a common shaft.

For example, the at least one intermediate gear wheel may be arranged between the at least one input gear wheel and the at least one output gear wheel to drive the at least one output gear wheel by being driven by the at least one input gear wheel. Alternatively, the intermediate gear wheel may be connected to the at least one output gear wheel, so that the intermediate gear wheel and the at least one output gear wheel are rotated together. Here, the common shaft provides the transfer of the rotational movement of the intermediate gear wheel on the at least one output gear wheel. As per the above, the intermediate gear wheel may also be configured as pretensioned frictional wheel for a force-fit connection to transfer a movement. Different transfer ratios may be set by different diameters of the intermediate gear wheel or intermediate frictional wheel, specifically with respect to the diameter of the at least one output gear wheel or pretensioned output frictional wheel and/or the at least one input gear wheel or pretensioned input frictional wheel.

In some embodiments, the at least one input gear wheel or pretensioned input frictional wheel comprises a pulley configured to rotate together with the input gear wheel or pretensioned input frictional wheel, and the at least one output gear wheel or pretensioned output frictional wheel comprises a pulley. The pulley of the at least one input gear wheel or pretensioned input frictional wheel and the pulley of the at least one output gear wheel or pretensioned output frictional wheel are connected to each other by a drive belt or a drive chain.

Accordingly, the transfer mechanism transfers the movement of the pulley of the at least one input gear wheel or pretensioned input frictional wheel via the drive belt or drive chain on the pully of the at least one output gear wheel or pretensioned output frictional wheel to drive the at least one output gear wheel or pretensioned output frictional wheel. Such configuration may provide more flexibility with respect to an arrangement of parts. Longer distances between the input and output may thereby be covered. In such configuration, the torque limiter, for example the overload clutch, may be disposed between at least one of the connections of the at least one input gear wheel or pretensioned input frictional wheel and the pulley of the at least one input gear wheel or pretensioned input frictional wheel or of the at least one output gear wheel or pretensioned output frictional wheel and the pulley of the at least one output gear wheel or pretensioned output frictional wheel. The transfer ratio depends on the diameter difference of the pulley of the at least one input gear wheel or pretensioned input frictional wheel and the pulley of the at least one output gear wheel or pretensioned output frictional wheel.

While the use of gear wheels provides rotation of engaged gear wheels in opposite directions, the use of a drive belt or drive chain provides a rotation of the input wheel and output wheel of such drive in the same direction. Accordingly, the transfer mechanism comprising a belt drive or chain drive may further comprise at least one further gear stage or any other adjustment mechanism to adjust the direction of movement of the brake caliper and the at least one second brake pad, respectively, to be opposite to the movement of the at least one first brake pad.

In some embodiments, the pulley of the at least one input gear wheel or pretensioned input frictional wheel and/or the pulley of the at least one output gear wheel or pretensioned output frictional wheel provide(s) a non-constant outer diameter with respect to a direction in parallel with the respective rotational axis of the pulley of the at least one input gear wheel or pretensioned input frictional wheel and/or the pulley of the at least one output gear wheel or pretensioned output frictional wheel.

Accordingly, instead of a belt drive or chain drive with a constant transfer ratio with respect to the pulleys, the transfer ratio may be adaptable by changing the effective diameter of at least one of the pulleys of the at least one input gear wheel or pretensioned input frictional wheel and the pulley of the at least one output gear wheel or pretensioned output frictional wheel. For example, the pulley of the at least one input gear wheel or pretensioned input frictional wheel and/or the pulley of the at least one output gear wheel or pretensioned output frictional wheel may be provided by two conical shims forming a diameter at a center position with respect to the direction in parallel with the respective rotational axis which is increasing with increasing distance to the center position. The conical shims may be configured to be moveable in the direction in parallel with the respective rotational axis to change the effective diameter. A control device and supply may be provided for moving the conical shims. An adaptable transfer ratio may be used in order to compensate tolerances or to adapt the transfer ratio depending on a stroke position. The movement of the conical shims may be a movement to shift both shims to displace the effective diameter or a movement to change the distance between the conical shims and thereby the diameter.

In some embodiments, the at least one input gear wheel or pretensioned input frictional wheel is assembled on at least one swinging arm, preferably at least a pair of swinging arms. The at least one swinging arm is preferably connected to a shaft of the at least one output gear wheel or pretensioned output frictional wheel. The shaft is preferably a common shaft of the at least one output gear wheel or pretensioned output frictional wheel and the at least one intermediate gear as previously described.

For example, each swinging arm of a pair of swinging arms is connected to the common shaft of the at least one output gear wheel or pretensioned output frictional wheel and the at least one intermediate gear. The swinging capability of the swinging arms supports the input gear wheel or pretensioned input frictional wheel to find the correct connection with the toothed rack surface or frictional surface of the bridge member in every brake actuation and wear state. The swinging capability of the swinging arm may be provided by a respective material selection and/or dimensioning for the swinging arms for resilient properties of the swinging arms and/or by respective hinges. The at least one swinging arm may allow to compensate production and assembling tolerances and may avoid inaccuracies or misalignments with respect to the parallel movement of components of the brake assembly.

In principle, irrespective of the swinging arms, the bridge member may be driven by an eccentric lever arm configuration. Accordingly, the bridge member may not only be moved in the braking direction but also perpendicular thereto, e.g. in an axial direction and a lateral direction, toward and away from the input gear wheel. In other words, the bridge member may provide some kind of S-shape movement upon being driven be the eccentric lever arm configuration. In such configuration, it may be advantageous to use the lever arm as actuating member to provide the toothed rack surface or frictional surface to drive the input gear wheel or pretensioned frictional wheel, respectively, to avoid the lateral movement of the toothed rack surface or frictional surface. Thus, with respect to the swinging arms, the swinging arms may not have to compensate for any additionally movement different from the movement in the braking direction but may only have to compensate for tolerances.

In some embodiments, the transfer mechanism comprises a holder frame and at least one tension spring assembled between the at least one swinging arm and the holder frame.

The at least one tension spring allows eliminating backlash between the toothed rack surface or frictional surface of the bridge member and the at least one input gear wheel or pretensioned input frictional wheel. The at least one tension spring pulls the at least one input gear wheel or pretensioned input frictional wheel toward the toothed rack surface or frictional surface of the bridge member.

In the event that the at least one output gear wheel or pretensioned output frictional wheel may be used in combination with the toothed rack surface or frictional surface of the brake caliper guidance, at least one bent wing of the holder frame may provide a backlash-free connection. The bent wing or bent wings, respectively, are configured to provide a specific flexibility, for example, by being of a resilient material and/or resilient design by shape and/or thickness, in order to provide a spring force that presses the toothed rack surface of the output rack onto the at least one output gear wheel or pretensioned output frictional wheel. The at least one bent wing may be integrally formed with the holder frame or a separate part to be attached or supported against the holder frame. By providing the at least one bent wing as a separate part, the required force in a concrete configuration may be defined more precisely or variants with different forces for specific applications may be implementable.

Alternatively or in addition, in some embodiments, the actuating member comprises a pretension mechanism arranged between the actuating member and the toothed rack surface of the input rack.

The pretension mechanism may be a spring member arranged between the actuating member and toothed rack surface of the input rack to pretension the toothed rack surface into a direction of the input gear wheel. The pretension mechanism may further comprise a spring guiding member to guide the spring in the direction towards the input gear wheel.

In principle, any pretension member, such as the bent wings or the like, described with respect to the output rack may also be used as pretension mechanism for the input rack. The concrete arrangement of such pretension mechanism may therefore also be different from the arrangement between the actuating member and the toothed rack surface of the input rack. For example, with respect to bent wings as pretension mechanism, at least one bent wing may be provided by the holder frame to act on the input rack.

In some embodiments, the transfer mechanism is configured to provide a transfer ratio to move the brake caliper by a stroke half of the stroke of the bridge member.

By moving the brake caliper about the half stroke of the bridge member, the at least one first brake pad and the at least one second brake pad are substantially moved equally toward and away from the brake disc. With respect to the movement toward the brake disc, the equal movement at least applies until the overload clutch, if implemented, opens. With the centering function by the overload clutch, the movement of the brake caliper about half stroke of the bridge member away from the brake disc, equal clearances of each first and second brake pad with respect to the brake disc may be ensured.

It is noted that the transfer mechanism may provide another transfer ratio or the transfer ratio may be adapted, respectively, for example, in order to compensate for tolerances and/or wear or to provide different moving distances intentionally.

Depending on the brake ratio it is possible to generate a dedicated share of clearance on first and second brake pads.

Another aspect of the present invention relates to a brake system comprising a brake assembly as described above and a brake disc arranged between the at least one first brake pad and the at least one second brake pad.

The brake disc is rotationally supported about a brake disc rotational axis and provides two braking surfaces extending in the radial direction with respect to the brake disc rotational axis. The at least one first brake pad and the at least one second brake pad are arranged on different sides of the brake disc and each comprising a contact surface or lining, respectively, facing a respective one of the braking surfaces of the brake disc.

In principle, any feature described with respect to the brake assembly is also applicable to the brake system comprising such brake assembly and vice versa.

In another aspect, the present invention relates to a method for operating a brake caliper of a brake assembly as described above or of a brake system as described above, comprising the steps of:
actuating the actuating member for a driving movement to move the at least one first brake pad in a braking direction towards the at least one second brake pad,
driving the transfer mechanism by the actuating member to transfer the driving movement to move the at least one first brake pad on the brake caliper for a driven movement of the brake caliper in the opposite direction,
stopping the transfer of the driving movement to move the at least one first brake pad on the brake caliper when a predetermined torque acting on the transfer mechanism is reached or the driving movement of the actuating member is stopped, and
restart the transfer of the driving movement to move the at least one first brake pad on the brake caliper when the actuating member and thereby the at least one brake pad is moved in the braking direction away from the at least one second brake pad for a driven movement of the brake caliper in the opposite direction.

The step of stopping the transfer of the driving movement to move the at least one first brake pad on the brake caliper when a predetermined torque acting on the transfer mechanism is reached may be implemented by the torque limiter as previously described. Alternatively or in addition, the transfer of the driving movement may be stopped by a load control, such as a load sensor and a load control device, which is configured to control a coupling and decoupling of at least one component of the transfer mechanism and/or of at least one component connected thereto to interrupt the transfer of the driving movement.

In principle, any feature described with respect to the brake assembly and/or brake system is also applicable to the method for operating the brake caliper and vice versa. Accordingly, any structural feature may also comprise a functional effect as feature of the method, while any functional feature of the method may be implemented in the brake assembly and/or brake system by respective device means.

In another aspect, the present invention relates to a vehicle comprising a brake assembly as described above or a brake system as described above, wherein the vehicle is preferably configured as a commercial vehicle, a truck, a trailer, a bus and/or as a combination of a towing vehicle and a trailer, and/or wherein the vehicle preferably comprises a pure electric, a hybrid or a conventional powertrain.

In principle, any feature described with respect to the brake assembly and/or brake system is also applicable to the vehicle and vice versa.

Further advantages, aspects and details of the invention are subject to the claims, the following description of exemplary embodiments applying the principles of the invention, and the respective exemplary drawings.
**Figure 1** is a cross-sectional view of a first exemplary embodiment of a brake assembly according to the present invention;
**Figure 2** is a cross-sectional view of a section of the brake assembly as per Fig. 1;
**Figure 3** is a perspective view of a first exemplary embodiment of a transfer mechanism applicable on the brake assembly as per Fig. 1;
**Figure 4** is a perspective view of an exemplary holder framer applicable on the transfer mechanism as per Fig. 3;
**Figure 5** is a plan view of the transfer mechanism as per Fig. 3 comprising the holder frame as per Fig. 4;
**Figure 6** is a plan, partially cross-sectional view of the transfer mechanism as per Fig. 3 in an installed state;
**Figure 7** is a lateral view of a second exemplary embodiment of a transfer mechanism applicable on the brake assembly as per Fig. 1;
**Figure 8** is a cross-sectional view of the second exemplary embodiment of a transfer mechanism applicable on the brake assembly as per Fig. 1;
**Figure 9** is a cross-sectional view of a third exemplary embodiment of a transfer mechanism applicable on the brake assembly as per Fig. 1;
**Figure 10** is a lateral view of a fourth exemplary embodiment of a transfer mechanism applicable on the brake assembly as per Fig. 1;
**Figure 11** is a lateral view of a fifth exemplary embodiment of a transfer mechanism applicable on the brake assembly as per Fig. 1; and
**Figure 12** is a cross-sectional view of a second exemplary embodiment of a brake assembly according to the present invention.

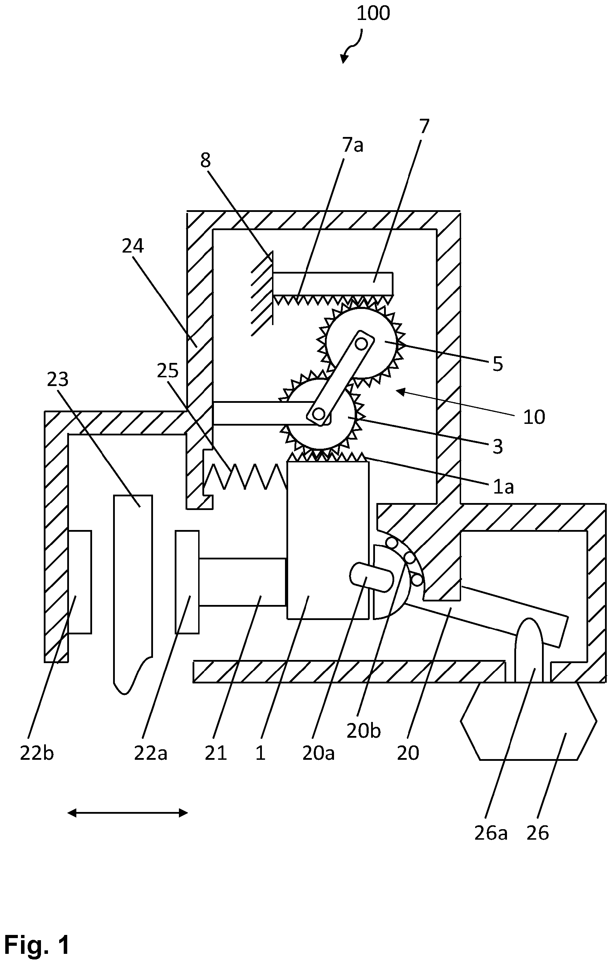

**Figure 1** shows a cross-sectional view of a brake assembly 100 according to a first exemplary embodiment of the present invention. The brake assembly 100 comprises a gear unit 10 as transfer mechanism and a brake caliper 24 for a brake disc 23. The gear unit 10 is installed into the brake caliper 24. The gear unit 10 connects a bridge member 1 configured to move an inboard brake pad 22a as first brake pad in a braking direction toward and away from the brake disc 23 and a brake carrier 8 via a brake caliper guiding pin 7 as brake caliper guidance. In the event of braking and releasing of the brake disc 23, this mechanical connection moves the brake caliper 24 on the brake caliper guiding pin 7 directly.

The movement of the brake caliper 24 is actively driven by the movement of the bridge member 1 as exemplary actuating member. In the event of a braking action, a service brake actuator 26 as an exemplary brake actuator with a service brake actuator member 26a as brake actuator member presses and rotates a lever arm 20 that starts to move the bridge member 1 via a lever arm actuating portion 20a for clamping the brake disc 23 via an actuated plunger 21 as brake pad actuator. The lever arm 20 further comprises a lever arm sliding portion 20b to support the rotational movement of the lever arm 20 against the brake caliper 24. Here, the lever arm sliding portion is implemented by a roller bearing. Alternatively or in addition, in other embodiments, the lever arm sliding portion may be implemented by a sliding material pairing in respectively corresponding shape pairings such as a convex lever arm portion sliding along a concave sliding portion of the brake caliper 24. The actuated plunger 21 presses the inboard brake pad 22a toward the brake disc 23 against a force of a brake release spring 25 arranged between the bridge member 1 and the brake caliper 24 and extending in the braking direction.

The bridge member 1 of the brake assembly 100 comprises a toothed rack surface 1a that is in backlash-free connection with the gear unit 10. The gear unit 10 comprises an input gear wheel 3, an intermediate gear wheel 4 and an output gear wheel 5 which form a gear wheel assembly. The gear wheel assembly 3, 4, 5 is also in backlash-free connection with a toothed rack surface 7a of the brake caliper guiding pin 7. The brake caliper guiding pin 7 is connected to the brake carrier 8.

In a braking phase in the event of moving the bridge member 1 toward the brake disc 23, the gear unit 10 moves the brake caliper 24 simultaneously with the movement of the inboard brake pad 22a and thereby also presses an outboard brake pad 22b as second brake pad on the brake disc 23. The simultaneous active movement of the inboard brake pad 22a and the outboard brake pad 22b offers improvement in the brake reaction time.

In the event of a brake release, the service brake actuator 26 is released and the compressed release spring 25 starts to move back the bridge member 1 and the lever arm 20 together with the plunger 21 and the inboard brake pad 22a. The backward movement of the bridge member 1 rotates the gear wheels 3, 4, 5 of the gear unit 10 in the opposite direction with respect to the movement of the bridge member 1. Accordingly, the brake caliper 24 and the outboard brake pad 22b are also moved away from the brake disc 23.

To allow the brake assembly 100 to achieve zero drag in the released state of the inboard brake pad 22a and the outboard brake pad 22b, the brake caliper 24 shall provide a centralized positioning. The stroke of the brake caliper 24 in the exemplary embodiment is therefore half of the movement of the bridge member 1, wherein the stroke can be adjusted by the transfer ratio between the used gear wheels 3, 4, 5, here, by the intermediate gear wheel 4 and the output gear wheel 5, of the gear unit 10.

By using the mechanical connection between the brake caliper 24, the bridge member 1 and the brake carrier 8, the brake release spring 25 holds the brake caliper 24 in the released state against the lateral loads of the brake assembly 100 and protects against undesired drag in a driving state of a respective vehicle.

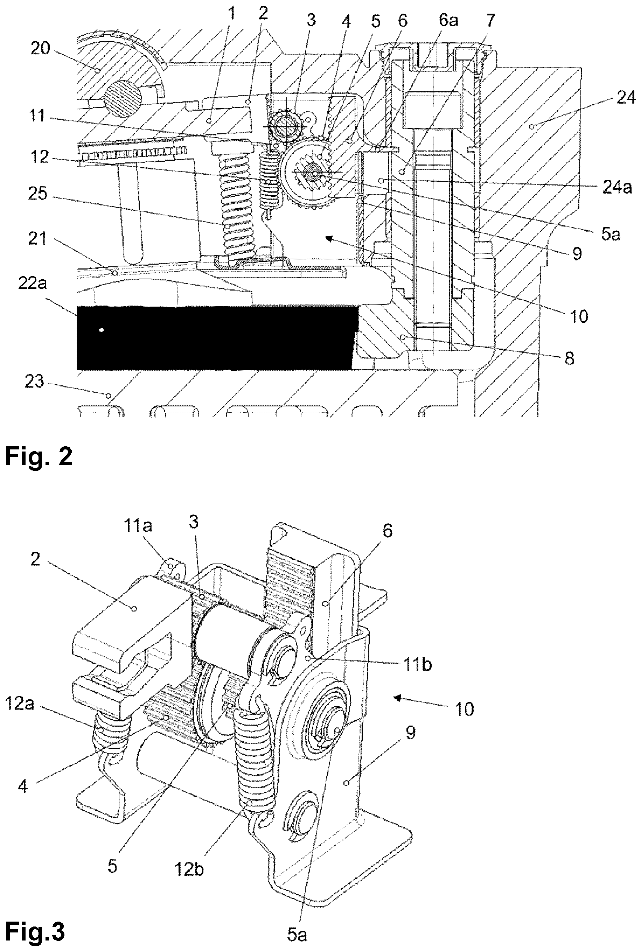

**Figure 2** shows a cross-sectional view of a section of the brake assembly 100 as per Fig. 1, and **Figure 3** shows a perspective view of a first exemplary embodiment of a transfer mechanism applicable on the brake assembly as per Fig. 1. In Figs. 2 and 3, the toothed rack surface is provided by a toothed rack part 2 as input rack. The toothed rack part 2 is fixed to the bridge member 1 and is in engagement with the input gear wheel 3. Accordingly, the toothed rack part 2 rotates the input gear wheel 3 when the bridge member 1 moves in brake actuating and releasing states.

The input gear wheel 3 is in engagement with the intermediate gear wheel 4, which rotates together with the output gear wheel 5, when it gets driven from the input gear wheel 3. When the output gear wheel 5 is rotated a toothed rack part 6 as output rack providing a toothed rack surface will undergo linear motion. The toothed rack part 6 is in connection with the brake caliper guiding pin 7 through a brake caliper opening 24a. However, in other embodiments, the toothed rack part 6 or output rack, respectively, may be directly integrated into the brake caliper guiding pin 7. The brake caliper guiding pin 7 is fixed to the brake carrier 8.

For compensating production and assembling tolerances and avoiding inaccuracy or misalignments of or during the parallel movement of the components of the brake assembly 100, the input gear wheel 3 is assembled on a pair of swinging arms 11a and 11b. Swinging arms 11a, 11b are connected to a common shaft 5a of the intermediate gear wheel 4 and the output gear wheel 5.

The swinging of the swinging arms 11a, 11b supports the input gear wheel 3 to find the correct connection with the toothed rack part 2 in every brake actuation and wear state. For eliminating the backlash between the toothed rack part 2 and input gear wheel 3 tension springs 12a and 12b are assembled between the swinging arms 11a, 11b and a holder frame 9 of the gear unit 10 to pull the input gear wheel 3 toward the toothed rack part 2.

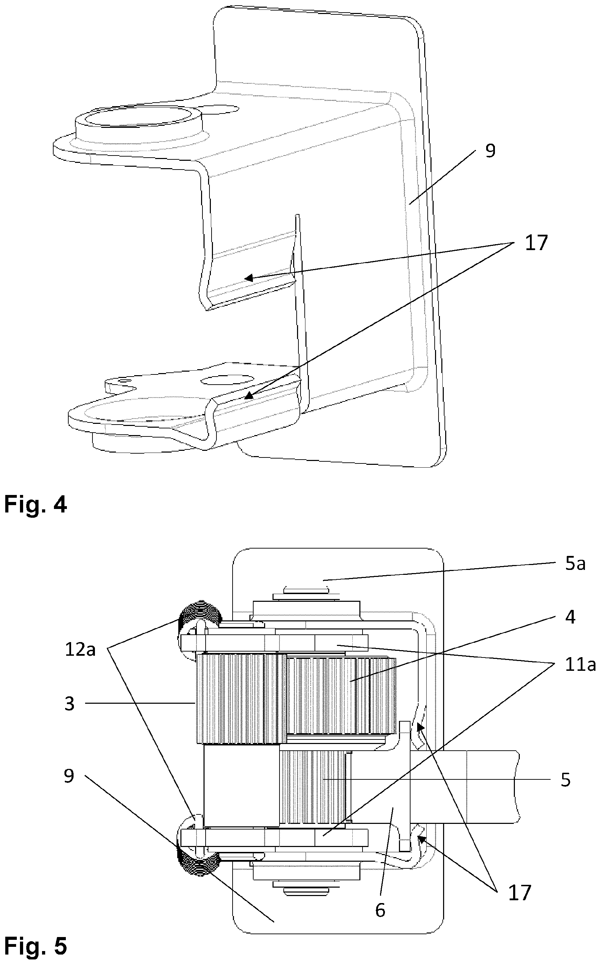

**Figure 4** shows a perspective view of an exemplary holder framer 9 applicable on the transfer mechanism as per Fig. 3. In case when output gear wheel 5 is used in combination with the toothed rack part 6 or output rack, respectively, bent wings 17 of the holder frame 9 solve the backlash-free connection. In the exemplary embodiment, the bent wings 17 are formed as resilient portions of the holder frame 9. Here, two bent wings 17 are integrally formed with the holder frame 9 and configured for a resilient movement in a direction toward and away from toothed rack part 6 or output rack, respectively. Accordingly, the bent wings 17 are configured to pretension the toothed rack part 6 against the output gear wheel 5 to compensate for tolerances or the like. However, in other embodiments, the holder frame 9 may comprise only one or more than two bent wings and/or other resilient portions such as spring members supported against the holder frame 9.

**Figure 5** shows a plan view of the transfer mechanism as per Fig. 3 comprising the holder frame 9 as per Fig. 4. The plan view shows the bent wings 17 in contact with the toothed rack part 6 to allow a backlash-free engagement of the toothed rack part 6 with the output gear wheel 5. In principle, any mechanism for the output rack and output gear wheel described with respect to the avoidance of backlash or to compensate for tolerances, respectively, is also applicable on the input rack and input gear wheel, and vice versa. Further, any respective mechanism described for a form-fit operation is also applicable for a force-fit operation, and vice versa.

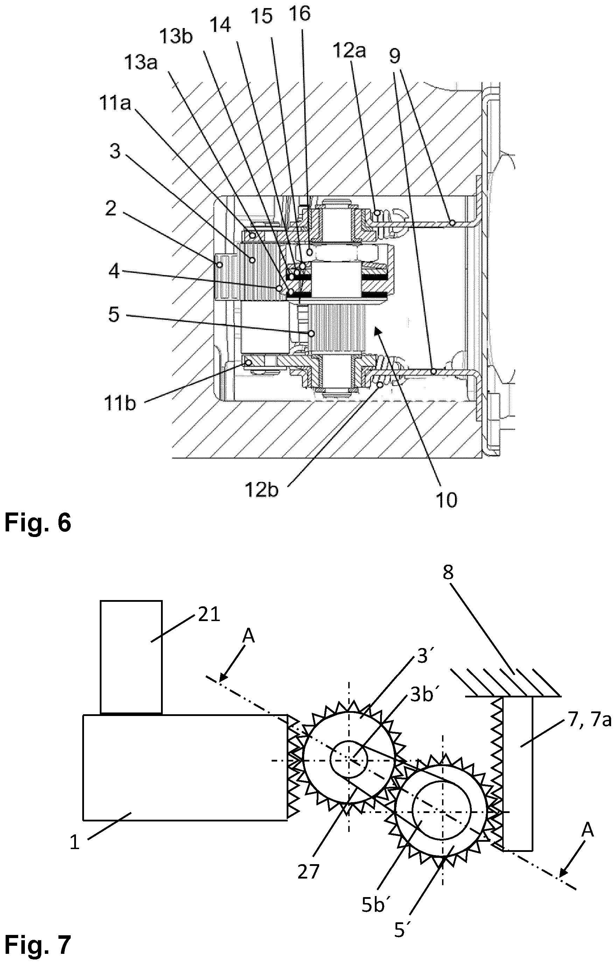

**Figure 6** shows a plan, partially cross-sectional view of the transfer mechanism as per Fig. 3 in an installed state. In case of brake actuation one of the inboard brake pad 22a and the outboard brake pad 22b on one side of the brake disc 23 may reach the brake disc 23 sooner than the other one of the inboard brake pad 22a and the outboard brake pad 22b on other side. In this case, the resulting force may overload the teeth of at least one the gear wheels 3, 4, 5. A similar case may occur when the brake assembly 100 receives larger lateral load than what the brake release spring 25 would be capable to compensate, and thus the teeth of the gear wheels 3, 4, 5 may be overloaded. To avoid damaging these gear components, a friction clutch as a torque limiter is provided for eliminating the risk of damaging the gear wheels 3, 4, 5.

The intermediate gear wheel 4 is fixed on the common shaft 5a of the output gear wheel 5 by using a cap spring 15 preloaded frictional clutch. The pretension of the cap spring 15 can be adjusted with a nut 16. A cap spring 14 presses the disc surface of the intermediate gear wheel 4 to the disc surface of the output gear wheel 5 with two inserted frictional discs 13a and 13b, which are placed on two sides of the disc surface of the intermediate gear wheel 4.

In case of larger torque on the gear wheels 3, 4, 5 than the transmittable value of the frictional clutch adjusted by the cap spring 15, the intermediate gear wheel 4 is able to rotate on the shaft 5a of the output gear wheel 5 because of the slip of the described frictional clutch. This free rotation of the intermediate gear wheel 4 protects the teeth of the gear wheels 3, 4, 5 against damaging. Misalignment of the braker caliper centering due to this slip of the torque limiter lasts till the first brake application that will readjust the proper centralized caliper position.

**Figure 7** shows a lateral view of a second exemplary embodiment of a transfer mechanism applicable on the brake assembly as per Fig. 1. Here, the transfer mechanism is provided by a belt drive instead of a gear drive. The belt drive may provide more flexibility regarding part arrangement. Longer distances between input and output may be covered. The movement of input gearwheel 3' will be transferred to a pulley 3b'. The drive belt 27 transmits the movement to pulley 5b'. The movement of pulley 5b' will be transmitted to output gear wheel 5'. One of the connections from the input gear wheel 3' to the pulley 3b' or from the output gear wheel 5' to the pulley 5b' is realized by an overload clutch according to Figure 4. The other connection is a fixed connection. The movement of output gear wheel 5' will be transmitted to the toothed rack surface 7a or the brake caliper guiding pin 7, respectively.

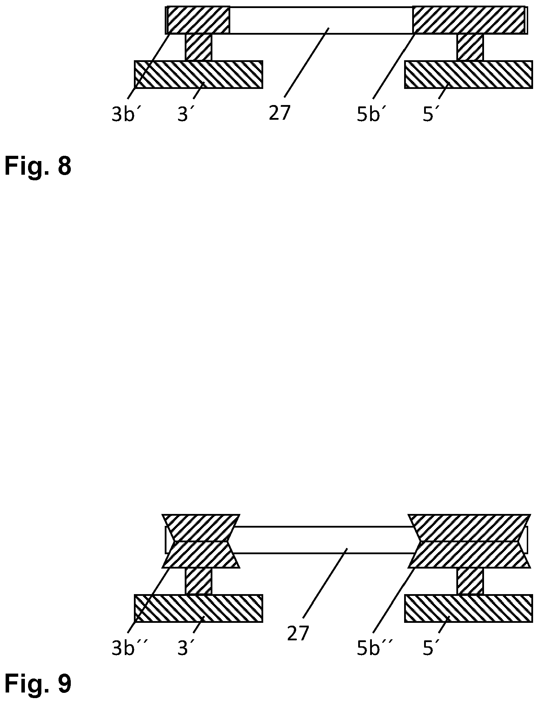

**Figure 8** shows a cross-sectional view of the second exemplary embodiment of a transfer mechanism applicable on the brake assembly as per Fig. 1. As apparent from Fig. 6, the pulley 3b' of the input gear wheel 3' and the pulley 5b'of the output gear wheel 5' provide a constant diameter over a height of the respective pulleys in a direction of the rotational axis of the input gear wheel 3' and the output gear wheel 5', respectively. Consequently, the transfer ratio of the belt drive is constant.

**Figure 9** shows a cross-sectional view of a third exemplary embodiment of a transfer mechanism applicable on the brake assembly as per Fig. 1. The transfer mechanism as per the third embodiment differs from the third embodiment by the belt drive being configured to provide a variable transfer ratio. Therefore, the effective contact diameter of the drive belt 27 can be changed so that the transfer ratio is affected. An additional control device and supply is provided for such change. The adaptable transfer ratio may be used in order to compensate tolerances or to adapt the transfer ratio depending on a stroke position. The movement of the input gear wheel 3' will be transferred to pulley 3b". The pulley 3b" comprises two conical shims with adjustable distance. The drive belt 27 transmits the movement to pulley 5b" which also comprises an upper and a lower conical shim with an adjustable distance. The adjustable distance allows to adapt the transfer ratio. The movement of the pulley 5b" will be transmitted to the output gear wheel 5'. One of the connections from the input gear wheel 3' to the pulley 3b" or from the output gear wheel 5' to the pulley 5b" is realized by an overload clutch according to Figure 4. The other connection is a fixed connection.

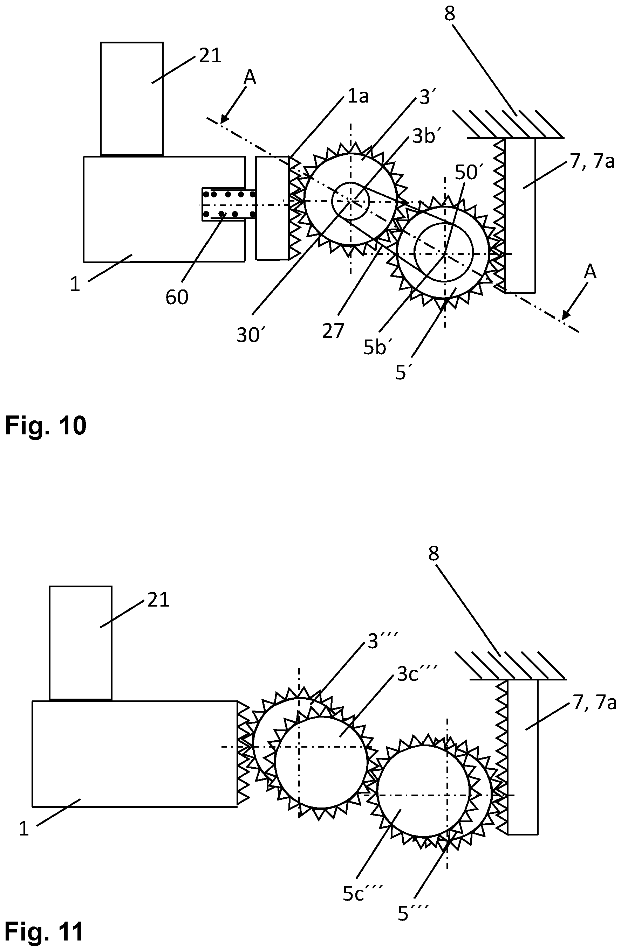

**Figure 10** shows a lateral view of a fourth exemplary embodiment of a transfer mechanism applicable on the brake assembly 100 as per Fig. 1. The fourth exemplary embodiment differs from the third exemplary embodiment by a pretension mechanism 60 arranged between the bridge member 1 and the toothed rack surface 1a. Accordingly, the toothed rack surface 1a of the bridge member 1 is pretensioned toward the input gear wheel 3' for a backlash-free engagement. Further, the pretension mechanism 60, here a compression spring in arranged in a spring guiding member, also allows a bilateral movement of the toothed rack surface towards and away from the input gear wheel 3'. Accordingly, the pretension mechanism 60 does not only allow to compensate for tolerances in a direction toward the input gear wheel 3' but also in a direction away from the input gear wheel 3', for example, to avoid excessive contact forces which may cause damages or increased wear.

In the shown embodiment, as an exemplary configuration, which may be also applicable to any other embodiment of the transfer mechanism, the input gear wheel 3' is pivoted to rotate about a rotational axis 30' affixed to the brake caliper 24. Analogously, the output gear wheel 5' is pivoted to rotate about a rotational axis 50' affixed to the brake caliper 24.

**Figure 11** shows a lateral view of a fifth exemplary embodiment of a transfer mechanism applicable on the brake assembly as per Fig. 1. According to the fifth embodiment, the input gear wheel 3‴ and the output gear wheel 5‴ each comprising a gear wheel, that is shaped with a non-constant diameter, for example a spiral shape or a cam shape. Accordingly, the transfer ratio will change depending on the stroke. Such solution may provide less slide distance in the overload clutch and avoid wear in such an overload clutch. The first axis as rotational axis of the input gear wheel 3‴ is driven by the bridge member 1. The bridge ember 1 drives the input gear wheel 3‴ of the first axis. The gear wheel 3c‴ of the non-constant diameter is fixed-connected to the first axle or via an overload clutch according to Figure 4. The gear wheel 3c‴ of the non-constant diameter has an outer diameter with a spiral shape. The movement is transferred to the gear wheel 5c‴ which is designed also with a spiral shaped outer diameter and fixed-connected to a second axis as rotational axis of the output gear wheel 5‴ or optional with an overload clutch. The movement of the gear wheel 5c‴ of the non-constant diameter is transferred to the output gear wheel 5‴. The gear wheel 3c‴ of the non-constant diameter is connected directly or via a separate rack to the brake caliper guiding pin 7 or toothed rack surface 7a according to the former description.

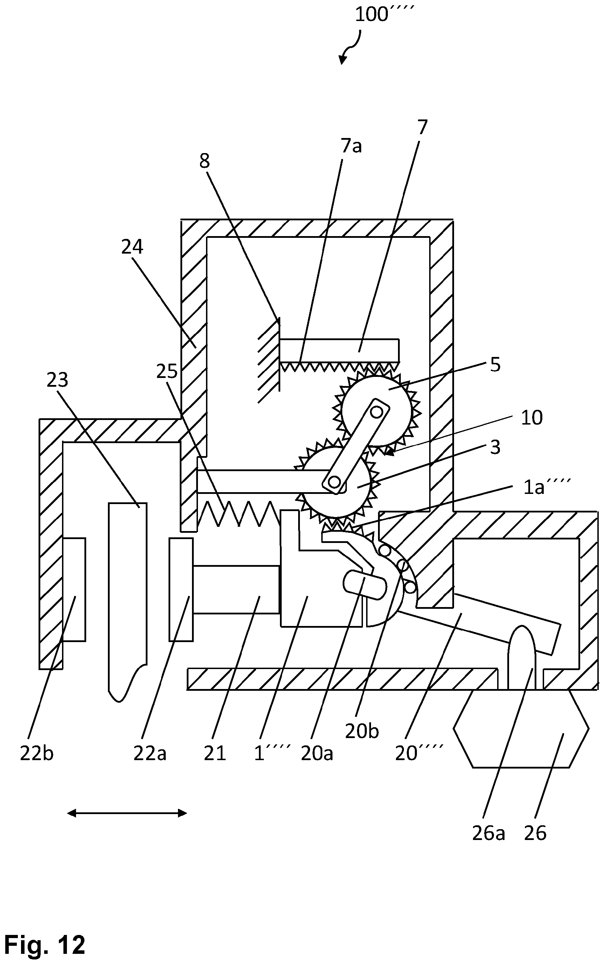

**Figure 12** shows a cross-sectional view of a second exemplary embodiment of a brake assembly 100ʺʺ according to the present invention. The brake assembly 100ʺʺ according to the second embodiment differs from the brake assembly 100 of the first embodiment by the toothed rack surface 1aʺʺ being provided by the lever arm 20ʺʺ instead of the bridge member 1 of the brake assembly 100 according to the first embodiment. The toothed rack surface 100ʺʺ is provided at an end portion of the lever arm 20ʺʺ facing toward the bridge member 1ʺʺ. Specifically, the end portion of the lever arm 20ʺʺcomprising the toothed rack surface 1aʺʺ is arranged between the bridge member 1ʺʺ and the input gear wheel 3, wherein the toothed rack surface 1aʺʺ is facing the input gear wheel 3. Here, the toothed rack surface 1aʺʺ on the end portion of the lever arm 20ʺʺ is formed along a curve with respect to the rotational axis of the lever arm 20ʺʺ to comply with the radius of the input gear wheel 3 for smooth engagement. However, in other embodiments, the toothed rack surface 1aʺʺ may be formed along a straight line, for example, if only small movements are required or if the toothed rack surface 1aʺʺ is pretensioned by a resilient member. Further, in other embodiments, the toothed rack surface 1aʺʺ may be arranged on the lever arm actuating portion 20a for the bridge member 1ʺʺ.

The invention has been described with respect to exemplary embodiments. However, the invention is not limited to the exemplary embodiments. In particular, even though the different embodiments described comprise gear wheels, such gear wheels may be replaced by pretensioned frictional wheels. The friction force may be adjusted to a certain limit so that a separate overload clutch may be omitted. Further, even though the exemplary embodiments as per Figs. 2 to 11 are described as being applicable to the brake assembly 100 as per Fig. 1, it is apparent that the principles provided by the embodiments and respective features are also applicable on the brake assembly 100ʺʺ as per Fig. 12 or any other brake assembly to implement the claimed invention.

### LIST OF REFERENCE SIGNS

- 1, 1ʺʺ: bridge member
- 1a, 1aʺʺ: toothed rack surface
- 2: toothed rack part (input rack)
- 3, 3', 3‴: input gear wheel
- 3b', 3b": pulley
- 3c‴: gear wheel
- 4: intermediate gear wheel
- 5, 5', 5‴: output gear wheel
- 5a: shaft
- 5b', 5b": pulley
- 5c‴: gear wheel
- 6: toothed rack part (output rack)
- 7: brake caliper guiding pin (brake caliper guidance)
- 7a: toothed rack surface
- 8: brake carrier
- 9: holder frame
- 10: gear unit (transfer mechanism)
- 11a, 11b: swinging arms
- 12a, 12b: tension springs
- 13: overload clutch (torque limiter)
- 13a, 13b: frictional disc
- 14: cap spring
- 15: cap spring
- 16: nut
- 17: bent wing
- 20, 20ʺʺ: lever arm
- 20a: lever arm actuating portion
- 20b: lever arm sliding portion
- 21: plunger (brake pad actuator)
- 22a: inboard brake pad (first brake pad)
- 22b: outboard brake pad (second brake pad)
- 23: brake disc
- 24: brake caliper
- 24a: brake caliper opening
- 25: spring (brake release member)
- 26: service brake actuator (brake actuator)
- 26a: service brake actuator member (brake actuator member)
- 27: drive belt
- 30': rotational axis (input gear wheel)
- 50': rotational axis (output gear wheel)
- 60: pretension mechanism
- 100, 100ʺʺ: brake assembly

## Claims

1. Brake assembly (100, 100ʺʺ), comprising:
at least one first brake pad (22a) and at least one second brake pad (22b), wherein the at least one first brake pad (22a) and the at least one second brake pad (22b) each comprising a braking surface arranged opposed to each other and facing each other,
a brake caliper (24) operatively connected to the at least one first brake pad (22a) and the at least one second brake pad (22b), wherein the respective operative connections are configured to cause a movement of the brake caliper (24) to move the at least one second brake pad (22b) toward the at least one first brake pad (22a) in response to a movement of the at least one first brake pad (22a) toward the at least one second brake pad (22b) in a braking direction,
a brake caliper guidance (7) configured to guide a relative movement of the brake caliper (24) in the braking direction, and
an actuating member (1, 20, 26) operatively connected to the at least one first brake pad (22a) and configured to move the at least one first brake pad (22a) into a braking direction by being translationally or rotationally driven,
wherein the operative connection between the brake caliper (24) and the first brake pad (22a) comprises at least one transfer mechanism (10) configured to move the brake caliper (24) in an opposite direction of the moving direction of the at least one first brake pad (22a) in the braking direction,
wherein the at least one transfer mechanism (10) is operatively connected to the brake caliper guidance (7) for a relative movement of the brake caliper (24) with respect to the brake caliper guidance (7), and
wherein the actuating member (1, 20, 26) is configured to drive the transfer mechanism (10) for an opposite movement of the brake caliper (24) along the brake caliper guidance (7) with respect to the at least one first brake pad (22a) being moved in the braking direction.

2. Brake assembly (100, 100ʺʺ) according to claim 1, wherein
the brake assembly (100) further comprises a torque limiter (13), preferably an overload clutch (13), the torque limiter (13) being configured to stop the opposite movement of the brake caliper (24) upon reaching a predetermined torque acting on the transfer mechanism (10).

3. Brake assembly (100, 100ʺʺ) according to claim 1 or 2, wherein
the actuating member (1, 20, 26) comprises at least one toothed rack surface (1a, 1aʺʺ) extending in the braking direction,
the brake caliper guidance (7) comprises at least one toothed rack surface (7a), and
the transfer mechanism (10) comprises at least one input gear wheel (3, 3', 3‴) pivotally supported about an input gear wheel rotational axis and operatively connected to the brake caliper (24) in a fixed positional relationship and at least one output gear wheel (5, 5', 5‴) pivotally supported about an output gear wheel rotational axis, wherein the at least one input gear wheel (3, 3', 3‴) is in engagement with the at least one toothed rack surface (1a, 1aʺʺ) of the actuating member (1, 20, 26) and the at least one output gear (5, 5', 5‴) is in engagement with the at least one toothed rack surface (7a) of the brake caliper guidance (7).

4. Brake assembly (100, 100ʺʺ) according to claim 1 or 2, wherein
the actuating member (1, 20, 26) comprises at least one frictional surface extending in the braking direction,
the brake caliper guidance (7) comprises at least one frictional surface, and
the transfer mechanism (10) comprises at least one pretensioned input frictional wheel pivotally supported about an input frictional wheel rotational axis and operatively connected to the brake caliper (24) in a fixed positional relationship and at least one pretensioned output frictional wheel pivotally supported about an output frictional wheel rotational axis, wherein the at least one pretensioned input frictional wheel is in frictional contact with the at least one frictional surface of the actuating member (1, 20, 26) and the at least one pretensioned output frictional wheel is in frictional contact with the at least one frictional surface of the brake caliper guidance (7).

5. Brake assembly (100, 100ʺʺ) according to claim 3 or 4, wherein
the at least one input gear wheel (3, 3‴) or pretensioned input frictional wheel is in engagement or frictional contact with the at least one output gear wheel (5, 5‴) or pretensioned output frictional wheel.

6. Brake assembly (100, 100ʺʺ) according to claim 5, wherein
the at least one input gear wheel (3‴) or pretensioned input frictional wheel comprises a gear wheel (3c‴) configured to rotate together with the input gear wheel (3‴) and having a non-constant diameter, preferably having an outer diameter of a spiral shape or cam shape, and/or
the at least one output gear wheel (5‴) or pretensioned output frictional wheel comprises a gear wheel (5c‴) configured to rotate together with the output gear wheel (5‴) and having a non-constant diameter, preferably having an outer diameter of a spiral shape or cam shape, wherein
the at least one input gear wheel (3‴) or pretensioned input frictional wheel is in engagement with the at least one output gear wheel (5‴) or pretensioned input frictional wheel via the gear wheel (3c‴) of the at least one input gear wheel (3, 3‴) and/or via the gear wheel (5c‴) of the at least one output gear wheel (5‴).

7. Brake assembly (100, 100ʺʺ) according to claim 3 or 4, wherein
the transfer mechanism (10) comprises at least one intermediate gear wheel (4), which is in engagement with the at least one input gear wheel (3) or pretensioned input frictional wheel, and which is in engagement with the at least one output gear wheel (5) or pretensioned output frictional wheel or connected to the at least one output gear wheel (5) or pretensioned output frictional wheel, preferably by a common shaft (5a).

8. Brake assembly (100, 100ʺʺ) according to claim 3 or 4, wherein
the at least one input gear wheel (3') or pretensioned input frictional wheel comprises a pulley (3b', 3b") configured to rotate together with the input gear wheel (3') or pretensioned input frictional wheel, and
the at least one output gear wheel (5') or pretensioned output frictional wheel comprises a pulley (5b', 5b"), wherein
the pulley (3b', 3b") of the at least one input gear wheel (3') or pretensioned input frictional wheel and the pulley (5b', 5b") of the at least one output gear wheel (5') or pretensioned output frictional wheel are connected to each other by a drive belt (27) or a drive chain.

9. Brake assembly (100, 100ʺʺ) according to claim 8, wherein
the pulley (3b', 3b") of the at least one input gear wheel (3') or pretensioned input frictional wheel and/or the pulley (5b', 5b") of the at least one output gear wheel (5') or pretensioned output frictional wheel provide(s) a non-constant outer diameter with respect to a direction in parallel with the respective rotational axis of the pulley (3b', 3b") of the at least one input gear wheel (3') or pretensioned input frictional wheel and/or the pulley (5b', 5b") of the at least one output gear wheel (5') or pretensioned output frictional wheel.

10. Brake assembly (100, 100ʺʺ) according to any one of the claims 3 to 9, wherein
the at least one input gear wheel (3, 3', 3‴) or pretensioned input frictional wheel is assembled on at least one swinging arm (11a, 11b), preferably at least a pair of swinging arms (11a, 11b), wherein the at least one swinging arm (11a, 11b) is preferably connected to a shaft (5a) of the at least one output gear wheel (5, 5', 5‴) or pretensioned output frictional wheel, which is preferably a common shaft (5a) of the at least one output gear wheel (5, 5', 5‴) or pretensioned output frictional wheel and the at least one intermediate gear (4) according to claim 7.

11. Brake assembly (100, 100ʺʺ) according to claim 10, wherein
the transfer mechanism (10) comprises a holder frame (9) and at least one tension spring (12a, 12b) assembled between the at least one swinging arm (11a, 11b) and the holder frame (9), and/or
the actuating member (1, 20, 26) comprises a pretension mechanism (60) arranged between the actuating member (1, 20, 26) and the toothed rack surface (1a, 1aʺʺ).

12. Brake assembly (100) according to any one of the preceding claims, wherein
the transfer mechanism (10) is configured to provide a transfer ratio to move the brake caliper (24) by a stroke half of the stroke of the bridge member (1).

13. Brake system comprising a brake assembly (100, 100ʺʺ) according to any one of the claims 1 to 12 and a brake disc (23) arranged between the at least one first brake pad (22a) and the at least one second brake pad (22b).

14. Method for operating a brake caliper (24) of a brake assembly (100, 100ʺʺ) according to any one of the claims 1 to 12 or of a brake system according to claim 13, comprising the steps of:
actuating the actuating member (1, 20, 26) for a driving movement to move the at least one first brake pad (22a) in a braking direction towards the at least one second brake pad (22b),
driving the transfer mechanism (10) by the actuating member (1, 20, 26) to transfer the driving movement to move the at least one first brake pad (22a) on the brake caliper (24) for a driven movement of the brake caliper (24) in the opposite direction,
stopping the transfer of the driving movement to move the at least one first brake pad (22a) on the brake caliper (24) when a predetermined torque acting on the transfer mechanism is reached or the driving movement of the actuating member (1, 20, 26) is stopped, and
restart the transfer of the driving movement to move the at least one first brake pad (22a) on the brake caliper (24) when the actuating member (1, 20, 26) and thereby the at least one brake pad (22a) is moved in the braking direction away from the at least one second brake pad (22b) for a driven movement of the brake caliper (24) in the opposite direction.

15. Vehicle comprising a brake assembly (100) according to one of the claims 1 to 12 or a brake system according to claim 13, wherein the vehicle is preferably configured as a commercial vehicle, a truck, a trailer, a bus and/or as a combination of a towing vehicle and a trailer, and/or wherein the vehicle preferably comprises a pure electric, a hybrid or a conventional powertrain.
